# FASCICULE DE BREVET EUROPEEN

(11) **EP 0 423 040 B1**
(45) Date de publication et mention de la délivrance du brevet: **28.12.1994**
(21) Numéro de dépôt: 90402859.4
(22) Date de dépôt: 12.10.1990
(51) Int. Cl.: B60P 1/44

(54) **Procédé et dispositif de relevage et de dégagement d'une plate-forme normalement horizontale**
Verfahren und Vorrichtung für das Heben und Entfernen von einer normalerweise horizontalen Plattform
Method and device for raising and clearing away a normally horizontal platform

(30) Priorité: 12.10.1989 FR 8913470
(43) Date de publication de la demande: 17.04.1991
(73) Titulaire: Bourgeois, Jacques, F-58310 Saint-Amand-en Puisaye (FR)
(72) Inventeur: Bourgeois, Jacques, F-58310 Saint-Amand-en Puisaye (FR)
(74) Mandataire: Bruder, Michel

(56) Documents cités:
- EP-A- 0 049 582
- US-A- 2 501 112
- US-A- 3 779 406

## Description

La présente invention concerne un procédé et un dispositif de relevage et de dégagement d'une plate-forme normalement horizontale, particulièrement adaptée au domaine des hayons élévateurs.

Dans un véhicule équipé d'un hayon où la ou les plate-formes sont supportées par un seul de leur côté, les mouvements de relevage latéral et de dégagement longitudinal de la ou des plate-formes par rapport aux parties frontales du hayon s'effectuent la plupart du temps simultanément, en balayant un volume important à l'intérieur du véhicule, ce qui limite d'autant le volume disponible pour le transport de la charge. Dans d'autres dispositifs où le relevage et le dégagement ne sont plus simultanés, on retrouve le même inconvénient ; en particulier, le hayon élévateur proposé dans la demande de brevet européen EP-0 049 582, au nom de la société STOWALIFT LIMITED, comporte une plate-forme, maintenue par un de ses côtés au moyen d'un bras de manoeuvre du type à parallélogramme déformable, et pouvant passer depuis une position horizontale d'utilisation à une position verticale de stockage, soit comme porte de fermeture, soit contre la paroi latérale du véhicule que ledit hayon équipe. Pour aboutir à cette dernière position, la plate-forme, d'abord relevée en position verticale à l'extérieur du véhicule, pivote ensuite avec le bras de manoeuvre autour d'un axe vertical selon un angle de 180°, balayant ainsi un large volume à l'intérieur du véhicule.

On connaît encore une exécution de hayon élévateur embarqué comportant des moyens de relevage latéral et de stockage qui est décrite dans le brevet US-2 501 112 formant le préambule des revendications indépendantes 1 et 6. Selon cette solution, il est prévu une cinématique pour le relevage consistant à combiner les mouvements autour d'un premier axe horizontal pour obtenir manuellement le basculement vertical suivi d'une rotation effectuée manuellement et selon une manipulation différente de l'opération de basculement amenant la plate-forme derrière son bras support grâce à une rotation de 180° selon un axe vertical, cette rotation laissant l'axe de basculement dans le plan horizontal.

Là encore, l'espace balayé par le double mouvement est considérable et souvent inacceptable compte tenu des véhicules recevant de tels équipements. En outre, cet équipement est difficilement automatisable car il conviendrait alors de motoriser les deux mouvements de basculement d'une part, de retournement d'autre part.

La présente invention vise à remédier à cet inconvénient en proposant un procédé de relevage et de dégagement d'une plate-forme, normalement plane, du type d'un hayon élévateur, maintenue latéralement par un de ses côtés au moyen d'un bras de manoeuvre, ladite plate-forme étant relevée latéralement par pivotement autour d'un premier axe suivi d'un pivotement autour d'un deuxième axe perpendiculaire au premier, depuis une position horizontale de service vers une position verticale de stockage, procédé caractérisé en ce que l'opération de complet relevage de la plate-forme s'effectue d'abord par pivotement d'un angle de 90° jusqu'à une position verticale intermédiaire, autour d'un premier axe de relevage, initialement horizontal, puis autour d'un deuxième axe de dégagement, horizontal et issu perpendiculairement du bras de manoeuvre, selon un angle de 90° amenant simultanément l'axe de relevage en position verticale et la plate-forme en position verticale finale de dégagement.

Lorsque le hayon élévateur ainsi constitué équipe un véhicule, la plate-forme est ainsi relevée latéralement à l'extérieur de ce véhicule, avant d'être basculée sur chant depuis sa position verticale intermédiaire vers sa position verticale de stockage, contre la paroi interne latérale du véhicule du côté de laquelle est installé le bras de manoeuvre. De cette façon, le dégagement de la plate-forme s'effectue sans empiéter sur la capacité de charge du véhicule.

Selon une forme d'exécution préférée de l'invention, les mouvements de relevage et de dégagement de la plate-forme sont assurés par l'application d'une force F variable en un point P de la plate-forme situé à une distance d1 de l'axe de relevage et à une distance d2 de l'axe de dégagement telles que, dans la phase de relevage de ladite plate-forme, le moment de ladite force F par rapport audit axe de relevage soit suffisant pour faire pivoter ladite plate-forme latéralement, sans que, dans le même temps, le moment de cette même force F par rapport audit axe de dégagement dépasse le moment qui est nécessaire au dégagement vertical de ladite plate-forme et de son axe de relevage.

Dans la phase de dégagement, on augmente la force F jusqu'à permettre la rotation de l'ensemble de la plate-forme et de son axe de relevage autour de l'axe de dégagement.

Bien entendu, il est clair que les deux phases de relevage et de dégagement résultent de l'application d'une force F agissant toujours dans le même sens ; en effet, l'inversion du sens de la force F entre les deux phases provoque tout simplement des mouvements inverses, à savoir le déploiement de l'ensemble depuis la position verticale de stockage vers la position verticale intermédiaire, ou le basculement de la plate-forme depuis cette dernière position vers sa position horizontale de service.

Par contre, la force F, lors du relevage et du dégagement, peut aussi bien être dirigée de haut en bas que de bas en haut, c'est-à-dire travailler en poussée ou bien en traction. Selon le cas, le point d'application de la force F est situé du côté de la partie de la plate-forme s'abaissant par rapport à son axe de relevage lors de son relevage (F agissant en poussée), ou du côté opposé à cette même partie (F agissant en traction).

Préférentiellement, le point d'application de la force F est choisi du côté de la partie de la plate-forme s'abaissant par rapport à son axe de relevage lors de la phase de relevage, c'est-à-dire avantageusement du côté où se trouve le bras de manoeuvre de ladite plate-forme. De cette façon, dans sa position verticale intermédiaire, la plate-forme est pratiquement accolée au bras de manoeuvre. Il ne reste alors plus qu'à provoquer son dégagement sur chant vers l'arrière dudit bras, par rotation de l'ensemble autour de l'axe de dégagement ; à cet effet, le point d'application de la force F est préférentiellement situé du côté de la partie de la plate-forme qui s'escamote vers le bas par rapport à l'axe de dégagement lors de la phase de dégagement de l'ensemble, la force F devant ainsi travailler en poussée.

L'invention concerne également un dispositif de relevage et de dégagement d'une plate-forme de hayon élévateur mettant en oeuvre le procédé proposé. La plate-forme, normalement plane, est maintenue latéralement par un de ses côtés au moyen d'un bras de manoeuvre, et comporte deux axes solidaires l'un de l'autre angulairement, non forcément coplanaires, un premier axe de relevage permettant de relever latéralement ladite plate-forme, par pivotement autour dudit axe de relevage, depuis une position horizontale de service vers une position verticale intermédiaire, et un second axe de dégagement, ménagé au droit dudit bras de manoeuvre, et permettant de dégager ladite plate-forme et son axe de relevage par rotation autour dudit axe de dégagement.

D'autres caractéristiques et avantages de la présente invention ressortiront mieux de la description qui va suivre de plusieurs formes d'exécution d'un dispositif conforme à l'invention, données à titre d'exemples non limitatifs en référence aux dessins annexés sur lesquels :
- les figures 1 à 3 sont des vues partielles en perspective d'un hayon élévateur muni d'une plate-forme maintenue par un de ses côtés au moyen d'un bras de manoeuvre vertical, la plate-forme, équipée d'un premier dispositif de relevage et de dégagement, étant successivement dans sa position horizontale de service, dans sa position verticale intermédiaire et dans sa position verticale de stockage,
- les figures 4 à 6 sont des vues partielles en perspective représentant le même hayon élévateur, dans les mêmes phases, équipé d'un dispositif de relevage et de dégagement conforme à une deuxième variante,
- la figure 7 est une vue partielle en perspective d'un hayon élévateur pour lequel les axes de basculement et de pivotement ne sont pas coplanaires.

Sur toutes les figures, seule la partie active du hayon élévateur, concernée par la présente invention, a été représentée. Ainsi, le hayon élévateur proposé comporte une plate-forme normalement plane, qui est maintenue latéralement par un de ses côtés au moyen d'un bras de manoeuvre 2 chargé de l'abaisser ou de la relever par rapport au sol ; par exemple, ce bras de manoeuvre 2 pourra être du type à parallélogramme déformable déjà connu dans l'état de la technique. La plate-forme 1 peut être orientée dans l'espace depuis une position horizontale de service vers une position de stockage, généralement verticale, par exemple située contre la paroi interne latérale d'un véhicule dont le hayon équiperait la porte arrière. Pour ce faire, et suivant la présente invention, la plate-forme 1 est soutenue par deux axes 3 et 4 solidaires l'un de l'autre angulairement, préférentiellement d'une manière orthogonale, un premier axe, dit de relevage 3, permettant de relever latéralement ladite plate-forme 1, par pivotement autour dudit axe de relevage 3 ; l'autre axe, dit de dégagement 4, qui est ménagé au droit dudit bras de manoeuvre 2, sert à dégager la plate-forme 1 et son axe de relevage 3 en les escamotant, par rotation sur chant autour de ce même axe de dégagement 4, soit vers l'avant, soit vers l'arrière du hayon, ce dernier cas étant bien entendu celui qui correspond à un stockage de la plate-forme 1 à l'intérieur du véhicule.

Suivant la forme d'exécution préférée de l'invention, le relevage latéral et le dégagement sur chant de la plate-forme 1 sont obtenus par le moyen d'une force F variable qui est appliquée en un point de ladite plate-forme 1 choisi :
- d'une part, du côté de la partie 1a de la plate-forme 1 s'abaissant par rapport à son axe de relevage 3 lors de la phase de relevage, c'est-à-dire avantageusement du côté où se trouve le bras de manoeuvre 2. De cette façon, dans sa position verticale intermédiaire relevée, la plate-forme 1 est pratiquement accolée au bras de manoeuvre 2.
- d'autre part, du côté de la partie 1b de la plate-forme 1 qui s'escamote vers le bas par rapport à l'axe de dégagement 4 lors de la phase de dégagement, sur chant, de ladite plate-forme 1 et de son axe de relevage 3.

Dans ces conditions, la force F travaille en poussée dans les deux phases de relevage et de dégagement, et l'organe moteur procurant cette poussée peut être constitué, d'une manière non limitative, par tout vérin ou par tout système de vérins ou leurs équivalents. On notera que dans la mesure où les efforts à produire soient accessibles à un être humain, une manoeuvre purement manuelle est également envisageable.

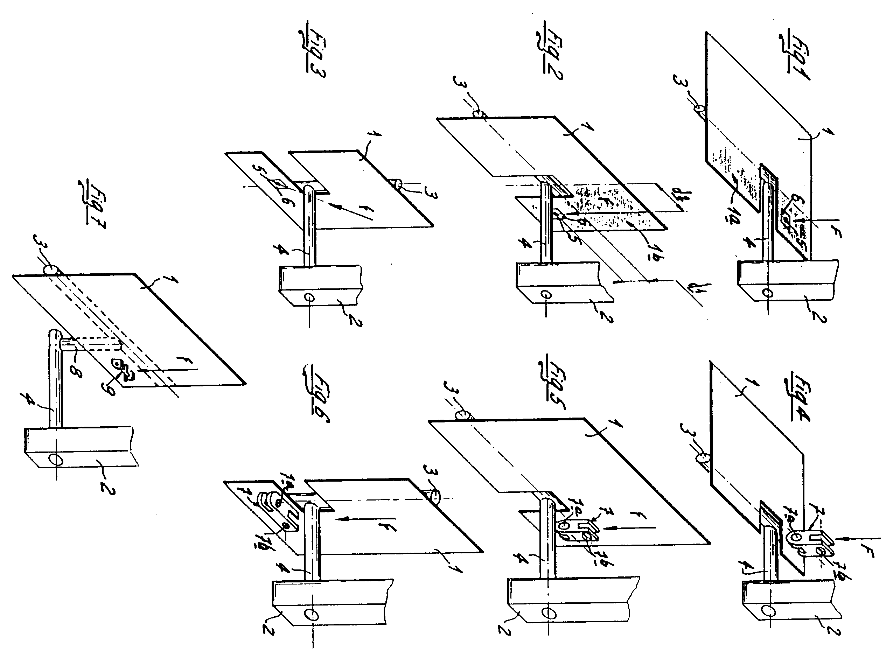

Conformément aux figures 1 à 3, la force F agit en poussée sur la plate-forme 1 par l'intermédiaire d'une articulation 5, ou en butée en un point 6, situé(e) à proximité du bras de manoeuvre 2, à des distances respectives d1 et d2 de l'axe de relevage 3 et de l'axe de dégagement 4. Sur la figure 1, la plate-forme 1 se trouve en position horizontale de service, la force F lui étant appliquée perpendiculairement, soit au niveau de l'articulation 5, soit au niveau de la butée 6. Dans cette position, l'axe de relevage 3 est horizontal, la poussée exercée par la force F provoquant, conformément à la figure 2, le relevage latéral de la plate-forme 1 qui se retrouve ainsi dans une position verticale intermédiaire. Suivant l'invention, la distance d2 est telle que le moment de la force F, dans cette première phase, est insuffisant pour provoquer la rotation de la plate-forme 1 et de son axe de relevage 3 autour de l'axe de dégagement 4. Conformément à la figure 3, l'intensité de la force F, qui continue de pousser dans le même sens, est alors augmentée afin que la plate-forme 1 et son axe de relevage 3 soient escamotés sur chant vers l'arrière du hayon élévateur.

Sur les figures 4 à 6, la force F est appliquée par l'intermédiaire d'une chape 7 à deux axes 7a et 7b croisés, positionnée sur la plate-forme 1 sensiblement au même endroit que l'articulation 5 ou la butée 6, les axes croisés 7a et 7b étant respectivement disposés parallèlement à l'axe de relevage 3, et à l'axe de dégagement 4. Lorsque la plate-forme 1 se trouve en position horizontale de service (fig.4), la chape 7 est globalement orientée perpendiculairement à ladite plate-forme 1. L'application de la force F sur la chape 7 provoque alors le relevage latéral de la plate-forme 1, ladite chape 7 pivotant autour de son axe 7a et venant sensiblement dans un plan parallèle à l'avant de ladite plate-forme qui se retrouve en position verticale intermédiaire sur le côté du bras de manoeuvre 2 (fig.5). La position de l'axe 7b par rapport à l'axe 7b définit un nouveau point d'application de la force F, situé à une même distance d2 de l'axe de dégagement 4 que son point d'application initial, l'intensité de ladite force F augmentant pour provoquer le dégagement sur chant de la plate-forme 1 et de son axe de relevage 3 vers l'arrière du hayon élévateur (fig.6).

Dans une dernière forme d'exécution représentée sur la figure 7, les axes de basculement 3 et de pivotement 4 ne sont pas coplanaires, mais sont reliés par un arbre intermédiaire 8, la force F étant appliquée sur la plate-forme 1 par l'intermédiaire d'une rotule ou d'un joint de cardan 9.

## Revendications

1. Procédé de relevage et de dégagement d'une plate-forme (1), normalement plane, du type d'un hayon élévateur, maintenue latéralement par un de ses côtés au moyen d'un bras de manoeuvre (2), ladite plate-forme (1) étant relevée latéralement par pivotement autour d'un premier axe suivi d'un pivotement autour d'un deuxième axe perpendiculaire au premier, depuis une position horizontale de service vers une position verticale de dégagement ou de stockage, procédé caractérisé en ce que l'opération de complet relevage s'effectue d'abord par pivotement d'un angle de 90° jusqu'à une position verticale intermédiaire, autour d'un premier axe de relevage (3), initialement horizontal, puis autour d'un deuxième axe de dégagement (4), horizontal et issu perpendiculairement du bras de manoeuvre (2), selon un angle de 90° amenant simultanément l'axe de relevage (3) en position verticale et la plate-forme (1) en position verticale finale de dégagement.

2. Procédé de relevage et de dégagement d'une plate-forme (1) selon la revendication 1, caractérisé en ce que les mouvements de relevage et de dégagement de ladite plate-forme (1) sont assurés par l'application d'une force F variable en un point P de la plate-forme (1) situé à une distance d1 de l'axe de relevage (3) et à une distance d2 de l'axe de dégagement (4) telles que, dans la phase de relevage de ladite plate-forme (1), le moment de ladite force F par rapport audit axe de relevage (3) soit suffisant pour faire pivoter ladite plate-forme (1) latéralement, sans que, dans le même temps, le moment de cette même force F par rapport audit axe de dégagement (4) dépasse le moment qui est nécessaire au dégagement vertical de ladite plate-forme (1) et de son axe de relevage (3).

3. Procédé de relevage et de dégagement d'une plate-forme (1) selon la revendication 2, caractérisé en ce que, dans la phase de dégagement, on augmente la force F jusqu'à permettre la rotation de l'ensemble de la plate-forme (1) et de son axe de relevage (3) autour de l'axe de dégagement (4).

4. Procédé de relevage et de dégagement d'une plate-forme (1) selon l'une quelconque des revendications 2 à 3, caractérisé en ce que la force F peut aussi bien être dirigée de haut en bas que de bas en haut, c'est-à-dire travailler aussi bien en poussée qu'en traction.

5. Procédé de relevage et de dégagement d'une plate-forme (1) selon l'une quelconque des revendications 2 à 4, caractérisé en ce que le point d'application de la force F est situé :
- d'une part, du côté de la partie 1a de la plate-forme (1) s'abaissant par rapport à sont axe de relevage (3) lors de la phase de relevage, c'est-à-dire avantageusement du côté où se trouve le bras de manoeuvre (2),
- d'autre part, du côté de la partie 1b de la plate-forme (1) qui s'escamote vers le bas par rapport à l'axe de dégagement (4) lors de la phase de dégagement sur chant de ladite plate-forme (1) et de son axe de relevage (3).

6. Dispositif de relevage et de dégagement d'une plate-forme (1), normalement plane, du type d'un hayon élévateur, maintenue latéralement par un de ses côtés au moyen d'un bras de manoeuvre (2), ladite plate-forme (1) étant relevée latéralement par pivotement autour d'un premier axe suivi d'un pivotement autour d'un deuxième axe perpendiculaire au premier, depuis une position horizontale de service vers une position verticale de dégagement ou de stockage, dispositif caractérisé en ce qu'il comporte deux axes solidaires l'un de l'autre angulairement, non forcément coplanaires, permettant l'opération de complet relevage de ladite plate-forme (1), un premier axe de relevage (3), initialement horizontal, permettant le pivotement de ladite plate-forme (1) d'un angle de 90° jusqu'à une position verticale intermédiaire, un second axe de dégagement (4), horizontal et issu perpendiculairement du bras de manoeuvre (2), amenant simultanément l'axe de relevage (3) en position verticale et la plate-forme (1) en position verticale finale de dégagement selon un angle de 90°.

7. Dispositif de relevage et de dégagement d'une plate-forme (1) selon la revendication 6, caractérisé en ce que les mouvements étant assurés par l'application d'une force F variable en un point P de ladite plate-forme (1), ladite force F agit en poussée sur la plate-forme (1) par l'intermédiaire d'une articulation (5) ou d'une butée (6) situé à proximité du bras de manoeuvre (2).

8. Dispositif de relevage et de dégagement d'une plate-forme (1) selon la revendication 6, caractérisé en ce que la force F agit en poussée sur la plate-forme (1) par l'intermédiaire d'une chape (7) à deux axes (7a) et (7b) croisés.

9. Dispositif de relevage et de dégagement d'une plate-forme (1) selon la revendication 6, caractérisé en ce que les axes de relevage (3) et de dégagement (4) ne sont pas coplanaires.

10. Dispositif de relevage et de dégagement d'une plate-forme (1) selon la revendication 9, caractérisé en ce que la force F agit en poussée sur la plate-forme (1) par l'intermédiaire d'une rotule ou d'un joint à la cardan (9).

## Claims

1. Method for raising and clearing away a normally plane platform (1), of the elevator board type, maintained laterally by one of its sides by means of a manoeuvring arm (2), said platform (1) being raised laterally by pivoting about a first axis followed by a pivoting about a second axis perpendicular to the first, from a horizontal service position towards a vertical position for clearing away or storage, method characterized in that the complete raising operation is firstly effected by pivoting through an angle of 90° up to an intermediate vertical position, about a first raising pivot pin (3), initially horizontal, then about a second clearing-away pivot pin (4), horizontal and issuing perpendicularly from the manoeuvring arm (2), at an angle of 90° simultaneously bringing the raising pivot pin (3) into vertical position and the platform (1) into final cleared away vertical position.

2. Method for raising and clearing away a platform (1) according to Claim 1, characterized in that the movements of raising and of clearing away of said platform (1) are ensured by the application of a variable force F at a point P of the platform (1) located at a distance d1 from the raising pivot pin (3) and at a distance d2 from the clearing away pivot pin (4), such that, in the phase of raising said platform (1), the moment of said force F with respect to said raising pivot pin (3) is sufficient to pivot said platform (1) laterally without, at the same time, the moment of this same force F with respect to said clearing away pivot pin (4) exceeding the moment which is necessary for the vertical clearing away of said platform (1) and its raising pivot pin (3).

3. Method for raising and clearing away a platform (1) according to Claim 2, characterized in that, in the phase of clearing away, the force F is increased until rotation of the assembly of the platform (1) and its raising pivot pin (3) about the clearing away pivot pin (4) is allowed.

4. Method for raising and clearing away a platform (1) according to either one of Claims 2 to 3, characterized in that the force F may equally well be directed downwardly and upwardly, i.e. work both in thrust and in traction.

5. Method for raising and clearing away a platform (1) according to any one of Claims 2 to 4, characterized in that the point of application of the force F is located:
- on the one hand, towards the part 1a of the platform (1) lowering with respect to its raising pivot pin (3) during the raising phase, i.e. advantageously on the side where the manoeuvring arm (2) is located,
- on the other hand, towards the part 1b of the platform (1) which retracts downwardly with respect to the clearing away pivot pin (4) during the clearing away phase on the edge of said platform (1) and its raising pivot pin (3).

6. Device for raising and clearing away a normally plane platform (1) of the elevator board type, maintained laterally by one of its sides by means of a manoeuvring arm (2), said platform (1) being raised laterally by pivoting about a first axis followed by a pivoting about a second axis perpendicular to the first, from a horizontal service position towards a vertical position for clearing away or storage, device characterized in that it comprises two pivot pins angularly fast with each other, not necessarily coplanar, allowing the operation of complete raising of said platform (1), a first, initially horizontal raising pivot pin (3), allowing pivoting of said platform (1) through an angle of 90° up to an intermediate vertical position, a second, horizontal clearing away pivot pin (4), issuing perpendicularly from the manoeuvring arm (2), simultaneously bringing the raising pivot pin (3) into vertical position and the platform (1) into final vertical position of clearing away, through an angle of 90°.

7. Device for raising and clearing away a platform (1) according to Claim 6, characterized in that the movements being ensured by the application of a variable force F at a point P of said platform (1), said force F acts in thrust on platform (1) via an articulation (5) or a stop (6) located in the vicinity of the manoeuvring arm (2).

8. Device for raising and clearing away a platform (1) according to Claim 6, characterized in that the force F acts in thrust on the platform (1) via a fork joint (7) with two crossed pins (7a) and (7b).

9. Device for raising and clearing away a platform (1) according to Claim 6, characterized in that the raising (3) and clearing away (4) pivot pins are not coplanar.

10. Device for raising and clearing away a platform (1) according to Claim 9, characterized in that the force F acts in thrust on the platform (1) via a ball-and-socket joint or a universal joint (9).

## Patentansprüche

1. Verfahren für das Heben und Wegschwenken einer normalerweise horizontalen Plattform (1) vom Typ einer Hebeladeklappe, welche auf einer ihrer Seiten seitlich mittels eines Manövrierarms (2) gehalten wird, wobei die Plattform (1) durch seitliches Schwenken um eine erste Achse und nachfolgendes Schwenken um eine zweite, zur ersten rechtwinklige Achse von einer horizontaler Arbeitstellung in eine senkrechte, weggeschwenkte oder Ruhestellung gehoben wird, **dadurch gekennzeichnet, daß** der vollständige Anhebevorgang durchgeführt wird, indem zuerst um eine erste, anfänglich horizontale Hebeachse (3) um einen Winkel von 90° bis in eine senkrechte Zwischenstellung geschwenkt, und dann um eine zweite Wegschwenkachse (4), welche horizontal und rechtwinklig vom Manövrierarm (2) ausragt, um einen Winkel von 90° geschwenkt wird, wodurch gleichzeitig die Hebeachse (3) in eine senkrechte Stellung und die Plattform (1) in eine senkrechte, weggeschwenkte Endstellung gebracht wird.

2. Verfahren für das Heben und Wegschwenken einer Plattform (1) nach Anspruch 1, **dadurch gekennzeichnet, daß** die Hebe- und Wegschwenkbewegungen der Plattform (1) durch Aufbringen einer veränderlichen Kraft F in einem Punkt P der Plattform (1) bewirkt werden, welcher sich in einem Abstand d1 von der Hebeachse (3) und im einem Abstand d2 von der Wegschwenkachse (4) befindet, derart daß in der Hebephase der Plattform (1) das Moment der Kraft F bezüglich der Hebeachse (3) ausreicht, um die Plattform (1) seitlich zu schwenken, ohne daß dabei das Moment dieser Kraft F bezüglich der Wegschwenkachse (4) ein für das senkrechte Wegschwenken der Plattform (1) und seiner Hebeachse (3) erforderliches Moment übersteigt.

3. Verfahren für das Heben und Wegschwenken einer Plattform (1) nach Anspruch 2, **dadurch gekennzeichnet, daß** in der Wegschwenkphase die Kraft F erhöht wird, bis die Einheit aus Plattform (1) und Hebeachse (3) um die Wegschwenkachse (4) schwenkt.

4. Verfahren für das Heben und Wegschwenken einer Plattform (1) nach einem der Ansprüche 2 bis 3, **dadurch gekennzeichnet, daß** die Kraft sowohl von oben nach unten als auch von unten nach oben gerichtet sein kann, d.h. sowohl auf Druck als auch auf Zug wirken kann.

5. Verfahren für das Heben und Wegschwenken einer Plattform (1) nach einem der Ansprüche 2 bis 4, **dadurch gekennzeichnet, daß** der Angriffspunkt der Kraft F sich
- einerseits auf der Seite des Bereichs 1a der Plattform (1) befindet, welche sich bezüglich der Hebeachse (3) im Verlauf der Hebephase absenkt, d.h. vorteilhaft auf der Seite des Manövrierarms (2), und
- andererseits auf der Seite des Bereichs 1b der Plattform (1) befindet, welche, während die Plattform (1) und deren Hebeachse (3) in eine hochkante Stellung wegschwenkt, bezüglich ihren Wegschwenkachse (4) nach unten klappt.

6. Vorrichtung für das Heben und Wegschwenken einer normalerweise horizontalen Plattform (1) vom Typ einer Hebeladeklappe, welche auf einer ihrer Seiten seitlich mittels eines Manövrierarms (2) gehalten ist, wobei die Plattform (1) durch seitliches Schwenken um eine erste Achse und nachfolgendes Schwenken um eine zweite, zur ersten rechtwinklige Achse von einer horizontalen Arbeitsstellung in eine senkrecte, weggeschwenkte oder Ruhestellung gehoben wird, **gekennzeichnet durch**
- zwei miteinander winklig und fest verbundene Achsen, die nicht unbedingt in derselben Ebene liegen müssen und die den vollständigen Anhebevorgang der Plattform ermöglichen,
- eine erste, anfänglich horizontale Hebeachse (3), welche das Schwenken der Plattform (1) um einen Winkel von 90° bis im eine senkrechte Zwischenstellung ermöglicht,
- sowie eine zweite Wegschwenkachse (4), welche horizontal und rechtwinklig vom Manövrierarm (2) ausragt und mittels welcher durch Schwenken um 90° gleichzeitig die Hebeachse (3) in eine senkrechte Stellung und die Plattform (1) in eine senkrechte, weggeshwenkte Endstellung gebracht werden.

7. Vorrichtung für das Heben und Wegschwenken einer Plattform (1) nach Anspruch 6, **gekennzeichnet durch** einen Punkt P der Plattform (1) zur Aufbringung einer die Bewegungen bewirkenden veränderlichen Kraft F, die auf Druck über eine in der Nähe des Manövrierarms (2) befindliche Gelenkverbindung (5) oder ein Widerlager (6) auf die Plattform (1) wirkt.

8. Vorrichtung für das Heben und Wegschwenken einer Plattform (1) nach Anspruch 6, **dadurch gekennzeichnet, daß** die Kraft F über ein Gabelstück (7) mit zwei über Kreuz liegenden Achsen (7a) und (7b) auf Druck auf die Plattform (1) wirkt.

9. Vorrichtung für das Heben und Wegschwenken einer Plattform (1) nach Anspruch 6, **dadurch gekennzeichnet, daß** die Hebeachse (3) und die Wegschwenkachse (4) nicht in derselben Ebene liegen.

10. Vorrichtung für das Heben und Wegschwenken einer Plattform (1) nach Anspruch 9, **dadurch gekennzeichnet, daß** die Kraft F über ein Kugel- oder ein Kardangelenk (9) auf Druck auf die Plattform (1) wirkt.
